# EUROPEAN PATENT APPLICATION

(11) **EP 4 464 953 A1**
(43) Date of publication of application: **20.11.2024**
(21) Application number: 22928932.7
(22) Date of filing: 13.12.2022
(51) Int. Cl.: F25B 1/00, B60P 3/20, F25B 1/10, F25B 43/00

(54) **CONSTANT-TEMPERATURE TRANSPORT SYSTEM, VEHICLE, AND CONTROL METHOD**

(30) Priority: 28.02.2022 JP 2022029385
(71) Applicant: MITSUBISHI HEAVY INDUSTRIES THERMAL SYSTEMS, LTD., Tokyo 100-8332 (JP)
(72) Inventor: NISHII, Tomohiro, Tokyo 100-8332 (JP); TANAKA, Takashi, Tokyo 100-8332 (JP); MORISHITA, Masatoshi, Tokyo 100-8332 (JP); KOBAYASHI, Naoki, Tokyo 100-8332 (JP); YAMAGISHI, Hiroki, Tokyo 100-8332 (JP); WATANABE, Yasushi, Tokyo 100-8332 (JP); HASHIZUME, Yoshihiro, Tokyo 100-8332 (JP)
(74) Representative: Cabinet Beau de Loménie
(86) International application number: PCT/JP2022/045903
(87) International publication number: WO 2023/162415

(57) **Abstract**

The present invention provides a control method, a vehicle, and a constant-temperature transport system capable of suppressing a reduction in heating performance. The constant-temperature transport system comprises: a compressor (21) that compresses a refrigerant; an exterior heat exchanger (24) connected to the downstream side of the compressor (21); an interior heat exchanger (29) connected to the downstream side of the exterior heat exchanger (24); a hot gas bypass pathway (33) that is connected to the discharge side of the compressor (21) and that supplies the refrigerant to the interior heat exchanger (29) by bypassing the external heat exchanger (24); an expansion valve (34) provided to the hot gas bypass pathway (33); a temperature detection unit (35) that detects the temperature of air affected by the interior heat exchanger (29); a pressure detection unit (36) that detects the pressure of the refrigerant on the outlet side of the interior heat exchanger (29); and a control unit that controls the expansion valve (34) such that, on the outlet side of the interior heat exchanger (29), the saturation temperature, which is dependent on the pressure, is lower than the temperature by a prescribed temperature.

## Description

### Technical Field

The present disclosure relates to a constant-temperature transport system, a vehicle, and a control method.

### Background Art

The refrigerant circuit is configured to connect a compressor, a condenser, an expansion valve, and an evaporator. In the refrigerant circuit, the refrigerant is circulated to perform temperature adjustment (PTL 1).

### Citation List

### Patent Literature

[PTL 1] International Publication No. WO2017/022076

### Summary of Invention

### Technical Problem

In a case where a refrigerant compressed by a compressor is supplied to a heat exchanger to heat air by the heat exchanger, there is a case where heating capacity cannot be sufficiently exhibited depending on an operating condition. For example, in the hot gas bypass method, there is a case where the heating capacity is reduced when the refrigerant is unintentionally condensed in the circulation passage. For example, in the heat pump method, the heating capacity may be reduced because the calorific value is reduced when the outside air temperature is low. In this way, there is a case where the heating capacity is reduced depending on the operating condition, and it is desired to suppress the reduction in heating capacity.

The present disclosure has been made in view of such circumstances, and an object thereof is to provide a constant-temperature transport system and a vehicle, and a control method, which can suppress a reduction in heating capacity.

### Solution to Problem

According to a first aspect of the present disclosure, there is provided a constant-temperature transport system including a compressor that compresses a refrigerant; an external heat exchanger that is connected to a downstream side of the compressor; an internal heat exchanger that is connected to a downstream side of the external heat exchanger; a hot gas bypass passage that is connected to a discharge side of the compressor and that supplies the refrigerant to the internal heat exchanger by bypassing the external heat exchanger; an expansion valve that is provided in the hot gas bypass passage; a temperature measurement unit that measures a temperature of air related to the internal heat exchanger; a pressure measurement unit that measures a pressure of the refrigerant on an outlet side of the internal heat exchanger; and a control unit that controls the expansion valve such that a saturation temperature corresponding to the pressure is lower than the temperature by a predetermined temperature on the outlet side of the internal heat exchanger.

According to a second aspect of the present disclosure, there is provided a control method for a constant-temperature transport system that includes a compressor that compresses a refrigerant, an external heat exchanger that is connected to a downstream side of the compressor, an internal heat exchanger that is connected to a downstream side of the external heat exchanger, a hot gas bypass passage that is connected to a discharge side of the compressor and that supplies the refrigerant to the internal heat exchanger by bypassing the external heat exchanger, an expansion valve that is provided in the hot gas bypass passage, a temperature measurement unit that measures a temperature of air related to the internal heat exchanger, and a pressure measurement unit that measures a pressure of the refrigerant on an outlet side of the internal heat exchanger, the method includes controlling the expansion valve such that a saturation temperature corresponding to the pressure is lower than the temperature by a predetermined temperature on the outlet side of the internal heat exchanger.

### Advantageous Effects of Invention

According to the present disclosure, there is an effect that a reduction in heating capacity can be suppressed.

### Brief Description of Drawings

Fig. 1 is a diagram showing an example of a refrigerant circuit of a constant-temperature transport system according to a first embodiment of the present disclosure.
Fig. 2 is a functional block diagram showing a function related to control included in the constant-temperature transport system according to the first embodiment of the present disclosure.
Fig. 3 is a graph showing a relationship between a pressure and a temperature according to the first embodiment of the present disclosure.
Fig. 4 is a graph showing an example of high-pressure lowering control according to the first embodiment of the present disclosure.
Fig. 5 is a flowchart showing an example of a procedure of the low-pressure-side control process according to the first embodiment of the present disclosure.
Fig. 6 is a flowchart showing an example of a procedure of a high-pressure lowering process of a high-pressure-side control according to the first embodiment of the present disclosure.
Fig. 7 is a flowchart showing an example of a procedure of the high-pressure increasing process of the high-pressure-side control according to the first embodiment of the present disclosure.
Fig. 8 is a Mollier chart describing the heating capacity according to a reference example.
Fig. 9 is a Mollier chart describing the heating capacity in a case where the low-pressure control according to the first embodiment of the present disclosure is performed.
Fig. 10 is a Mollier chart describing the heating capacity in a case where the high-pressure control according to the first embodiment of the present disclosure is performed.
Fig. 11 is a diagram showing an example of a hardware configuration of the control system according to the first embodiment of the present disclosure.
Fig. 12 is a diagram showing a refrigerant circuit according to a second embodiment of the present disclosure.
Fig. 13 is a Mollier chart describing the heating capacity according to the second embodiment of the present disclosure.
Fig. 14 is a diagram showing a refrigerant circuit according to the second embodiment of the present disclosure.
Fig. 15 is a diagram showing a refrigerant circuit according to a third embodiment of the present disclosure.
Fig. 16 is a Mollier chart describing the heating capacity according to the third embodiment of the present disclosure.

### Description of Embodiments

### [First Embodiment]

Hereinafter, a first embodiment of a constant-temperature transport system, a vehicle, and a control method according to the present disclosure will be described with reference to the drawings.

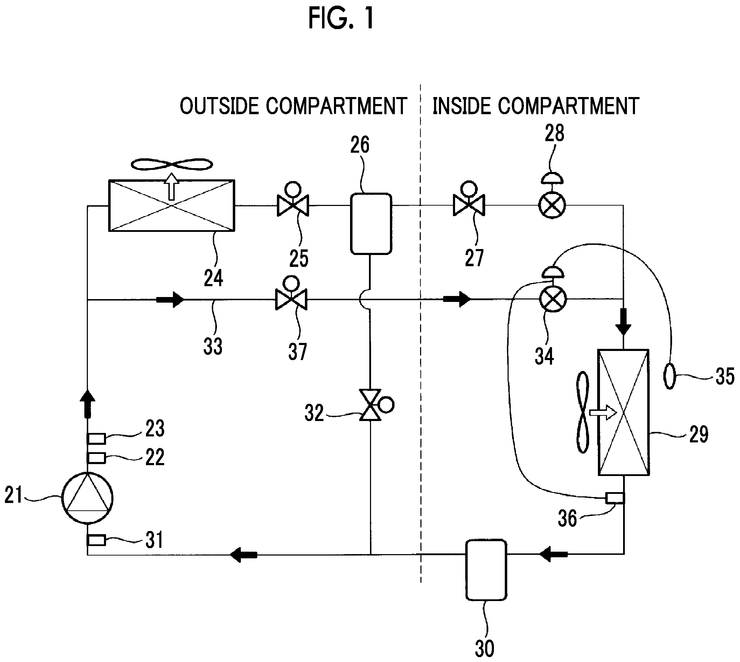

Fig. 1 is a diagram showing an example of a refrigerant circuit of a constant-temperature transport system. As shown in Fig. 1, the constant-temperature transport system includes a hot gas heating function. The constant-temperature transport system is mounted on a vehicle. The vehicle is provided with a cargo compartment for transporting a cargo, and inside of the cargo compartment (inside of a compartment) is adjusted to a constant temperature.

The compressor 21 compresses the refrigerant. The compressor 21 is driven by, for example, an engine of a vehicle including a constant-temperature transport system. The rotation speed of the compressor 21 is linked to the rotation speed of the engine of the vehicle. The external heat exchanger 24 is connected to a downstream side of the compressor 21. The external heat exchanger 24 is a condenser. The external heat exchanger 24 is provided outside the cargo compartment. The refrigerant compressed by the compressor 21 is sent to the external heat exchanger 24. For example, a discharge temperature sensor 22 or a discharge pressure sensor 23 is provided on an outlet side of the compressor 21. The compressed high-temperature and high-pressure refrigerant is condensed by exchanging heat with the air introduced by the fan in the external heat exchanger 24. The refrigerant is sent to the receiver 26 via the outlet electromagnetic valve 25. The refrigerant is expanded (decompressed) by the expansion valve 28 via the liquid line electromagnetic valve 27, and is sent to the internal heat exchanger 29. The internal heat exchanger 29 is an evaporator. The internal heat exchanger 29 is connected to the downstream side of the external heat exchanger 24. The external heat exchanger 24 is provided inside the cargo compartment, and adjusts the inside of the cargo compartment to a predetermined temperature by heat exchange. In the internal heat exchanger 29, the refrigerant evaporates by exchanging heat with the air introduced by the fan. The refrigerant circulates to the compressor 21 via the accumulator 30. For example, a suction pressure sensor 31 is provided on the inlet side of the compressor 21. In addition, the liquid bypass electromagnetic valve 32 may be provided in a liquid bypass passage of the inlet side of the compressor 21 (outlet side of the accumulator) from the receiver 26 to allow the refrigerant to be bypassed.

A hot gas bypass passage 33 is provided on the outlet side of the compressor 21 (inlet side of the external heat exchanger 24). The hot gas bypass passage 33 is a passage that bypasses the external heat exchanger 24 from the outlet side of the compressor 21 and bypasses the refrigerant to the inlet side of the internal heat exchanger 29. The hot gas electromagnetic valve 37 is provided in the hot gas bypass passage 33 to control the bypass.

The hot gas bypass passage 33 is provided with an expansion valve 34. The expansion valve 34 is, for example, a temperature-type automatic expansion valve. The expansion valve 34 is not limited to the temperature-type automatic expansion valve, and other methods may be used.

The temperature measurement unit 35 is provided for the internal heat exchanger 29. The temperature measurement unit 35 measures the temperature of the air related to the internal heat exchanger 29. The temperature of the air is the air temperature inside the compartment. Specifically, the temperature measurement unit 35 is provided on the downstream side of the air flow by the fan with respect to the internal heat exchanger 29. The temperature measurement unit measures the temperature of the air that has been subjected to heat exchange in the internal heat exchanger 29. The temperature measurement unit 35 may be provided on the upstream side of the air flow by the fan with respect to the internal heat exchanger 29. The temperature measurement unit 35 is, for example, a temperature-sensitive cylinder. The temperature measurement unit 35 is not limited to the temperature-sensitive cylinder, and other methods such as a temperature sensor may be used.

A pressure measurement unit 36 is provided on the outlet side of the internal heat exchanger 29. The pressure measurement unit 36 measures the pressure of the refrigerant on the outlet side of the internal heat exchanger 29. The pressure measurement unit 36 is, for example, a pressure equalizing pipe. The pressure measurement unit 36 is not limited to the pressure equalizing pipe, and other methods such as a pressure sensor may be used.

In a case of cooling the inside of the compartment (cooling operation), the hot gas electromagnetic valve 37 is closed, the liquid line electromagnetic valve 27 is opened, the outlet electromagnetic valve 25 is opened, and the liquid bypass electromagnetic valve 32 is closed. The compressed refrigerant is introduced into the internal heat exchanger 29 via the external heat exchanger 24, the receiver 26, and the expansion valve 28 to cool the inside of the compartment.

In a case where the inside of the compartment is heated (heating operation), the hot gas electromagnetic valve 37 is opened, the liquid line electromagnetic valve 27 is closed, the outlet electromagnetic valve 25 is closed, and the liquid bypass electromagnetic valve 32 is closed. The high-temperature and high-pressure refrigerant compressed by the compressor 21 is introduced into the internal heat exchanger 29 by bypassing the external heat exchanger 24 to heat the inside of the compartment.

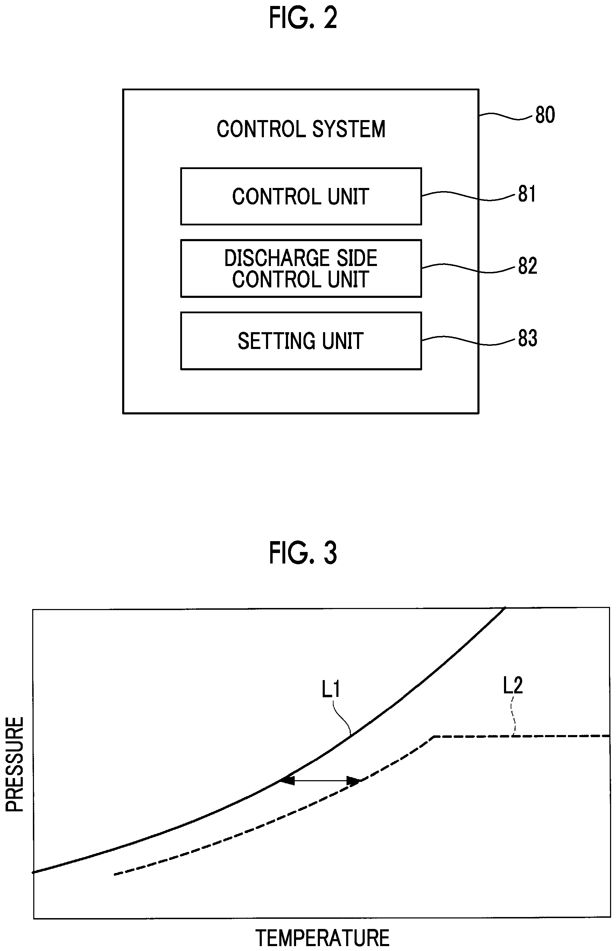

Fig. 2 is a functional block diagram showing a function related to control included in the constant-temperature transport system. As shown in Fig. 2, the control system 80 for the constant-temperature transport system includes a control unit 81, a discharge side control unit 82, and a setting unit 83. In the present embodiment, since the expansion valve 34 is a temperature-type automatic expansion valve, the function of the control unit 81 is mechanically incorporated in the temperature-type automatic expansion valve. For example, the expansion valve 28 may also be a mechanical type.

The control unit 81 controls the expansion valve 34 in a case where the heating operation is performed (low-pressure-side control). Specifically, the control unit 81 controls the expansion valve 34 such that the saturation temperature corresponding to the measured pressure is lower than the measured temperature by a predetermined temperature on the outlet side of the internal heat exchanger 29.

The control unit 81 acquires the temperature of the air from the temperature measurement unit 35 and acquires the pressure of the refrigerant on the outlet side of the internal heat exchanger 29 from the pressure measurement unit 36. Then, the expansion valve 34 is controlled such that the saturation temperature of the refrigerant on the outlet side of the internal heat exchanger 29 corresponding to the pressure of the refrigerant is lower than the temperature of the air by a predetermined temperature. That is, the outlet side of the internal heat exchanger 29 is used as an adjustment point, and the pressure (saturation temperature) of the adjustment point is controlled by the expansion valve 34. The condensation of the refrigerant in the internal heat exchanger 29 is suppressed by the saturation temperature of the refrigerant on the outlet side of the internal heat exchanger 29 being lower than the temperature of the air by the predetermined temperature.

It is preferable that the predetermined temperature is set to be 5°C or higher. Further, it is preferable that the predetermined temperature is set in a range of 5°C or higher to 10°C or lower. For example, in a case where the predetermined temperature is set to 10°C, when the temperature of the air is 20°C, the pressure of the refrigerant at the adjustment point is adjusted such that the saturation temperature is 10°C (20°C - 10°C).

Fig. 3 is a diagram showing a relationship between the pressure and the temperature. In Fig. 3, L1 is shown, and a specific type of refrigerant is in a liquid phase in a region on the left side of L1 and is in a gas phase in a region on the right side of L1. That is, in order to prevent the refrigerant from being condensed, it is necessary to maintain the state of the refrigerant on the right side of L1. Here, L2 indicates a state of the refrigerant in a case where the pressure is controlled by the expansion valve 34. In this way, the pressure of the refrigerant is adjusted by the expansion valve 34, and the refrigerant is operated in the region on the right side of L1. Therefore, the condensation of the refrigerant is suppressed.

The control unit 81 controls the pressure on the outlet side of the internal heat exchanger 29 as described above. That is, the control unit 81 controls the pressure of the refrigerant on the suction side of the compressor 21, and may be referred to as a suction-side control unit. In addition, the suction side of the compressor 21 is a low-pressure side, and may be referred to as a low-pressure-side control unit.

The discharge side control unit 82 controls the pressure of the refrigerant on the discharge side of the compressor 21 (high-pressure-side control). Since the discharge side of the compressor 21 is a high-pressure side, the discharge side control unit 82 is also referred to as a high-pressure-side control unit.

The discharge side control unit 82 controls such that the pressure of the refrigerant on the discharge side of the compressor 21 is maintained in a range between the upper limit value and the lower limit value.

The discharge side control unit 82 controls to reduce the pressure of the refrigerant in a case where the pressure of the refrigerant on the discharge side of the compressor 21 is equal to or higher than the upper limit value. Specifically, in a case where the pressure on the discharge side (high-pressure side) of the compressor 21 is reduced during the heating operation (high-pressure lowering control), the hot gas electromagnetic valve 37 is opened, the liquid line electromagnetic valve 27 is closed, the outlet electromagnetic valve 25 is opened, and the liquid bypass electromagnetic valve 32 is closed. That is, the outlet electromagnetic valve is opened, and a part of the refrigerant (that is, the refrigerant of the circulation passage) flowing through the hot gas bypass passage 33 is stored in the receiver 26. In this manner, the amount of the circulating refrigerant is reduced, and the pressure of the refrigerant on the discharge side of the compressor 21 is reduced.

The upper limit value is set in advance. For example, an upper limit value of the pressure at which the system can be safely operated is set in advance, based on a rated pressure of the machine or the like. The determination may be made based on the usage limit of the compressor 21. The upper limit value may be, for example, an upper limit value of the refrigerant temperature on the discharge side of the compressor 21.

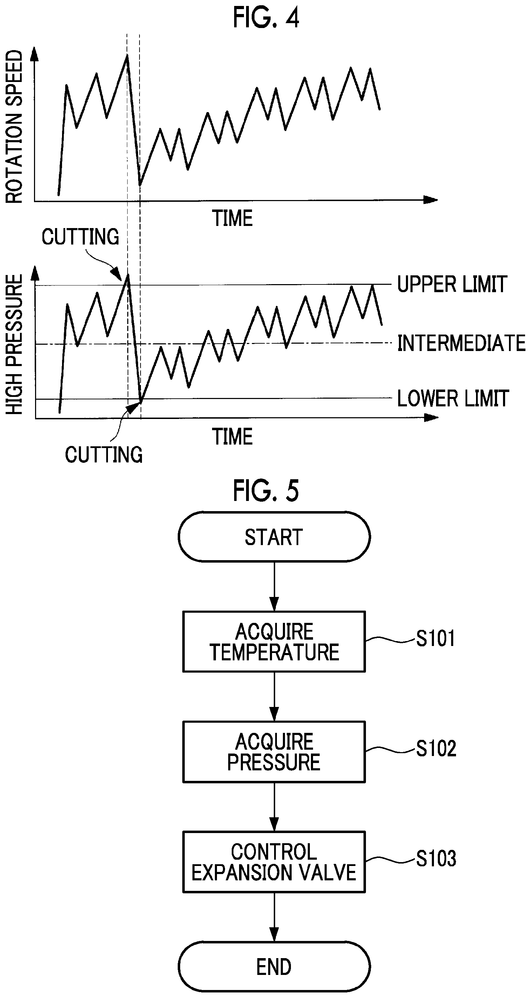

Fig. 4 is a diagram showing an example of high-pressure lowering control. As shown in Fig. 4, in a case where the rotation speed of the compressor 21 varies in accordance with the situation in conjunction with the engine of the vehicle, the high pressure also changes in accordance with the change. In a case where the high pressure exceeds the upper limit value due to the variation, the high-pressure lowering control is performed for the safe operation of the system, and the pressure is suppressed from being higher than the upper limit value.

The discharge side control unit 82 controls to increase the pressure of the refrigerant in a case where the pressure of the refrigerant on the discharge side of the compressor 21 is equal to or lower than the lower limit value. Specifically, in a case where the pressure on the outlet side (high-pressure side) of the compressor 21 is increased in the heating operation (high-pressure increasing control), the hot gas electromagnetic valve 37 is opened, the liquid line electromagnetic valve 27 is closed, the outlet electromagnetic valve 25 is closed, and the liquid bypass electromagnetic valve 32 is opened. That is, the liquid bypass electromagnetic valve is opened to merge the refrigerant of the receiver 26 with the circulation passage (the refrigerant flowing through the hot gas bypass passage 33), so that the amount of the circulating refrigerant is increased and the pressure of the refrigerant on the discharge side of the compressor 21 is increased.

The lower limit value is set in the setting unit 83 (to be described later).

Fig. 4 also shows an example of the high-pressure increasing control. As shown in Fig. 4, in a case where the rotation speed of the compressor 21 changes in accordance with the situation in conjunction with the engine of the vehicle, the high pressure (pressure on the discharge side of the compressor 21) also varies in accordance with the change. In a case where the high pressure falls below the lower limit value due to the variation, the high-pressure increasing control is performed to suppress a reduction in the heating capacity, and the pressure is suppressed from being reduced than the lower limit value.

The setting unit 83 sets a lower limit value related to the high-pressure increasing control. For example, it is preferable that the lower limit value is set to a high value such that the pressure on the discharge side can be kept near the upper limit value. However, when a width between the upper limit value and the lower limit value is too narrow, the increasing and lowering control is frequently performed, and thus there is a possibility that the heating capacity may be reduced due to a capacity loss caused by a pressure variation. Therefore, it is preferable that the lower limit value is set to a high value such that the increasing and lowering control is not frequently performed. There is a possibility that the operating point may be varied by the low-pressure-side control, but the high-pressure increasing control is performed when the pressure on the discharge side falls below the lower limit value.

In this way, on the high-pressure side, the excessive increase in pressure and the excessive reduction in pressure are suppressed by the high-pressure lowering control and the high-pressure increasing control.

Next, an example of the low-pressure-side control process by the above-described constant-temperature transport system will be described with reference to Fig. 5. Fig. 5 is a flowchart illustrating an example of procedure of the low-pressure-side control process according to the present embodiment.

First, the temperature measurement unit 35 acquires the temperature of the air (S101). Then, the pressure measurement unit 36 acquires the pressure of the refrigerant on the outlet side of the internal heat exchanger 29 (S102). The order of processing in S101 and S102 is not limited. Then, the expansion valve 34 is controlled such that the saturation temperature of the refrigerant on the outlet side of the internal heat exchanger 29 corresponding to the pressure is lower than the temperature of the air by a predetermined temperature (S103).

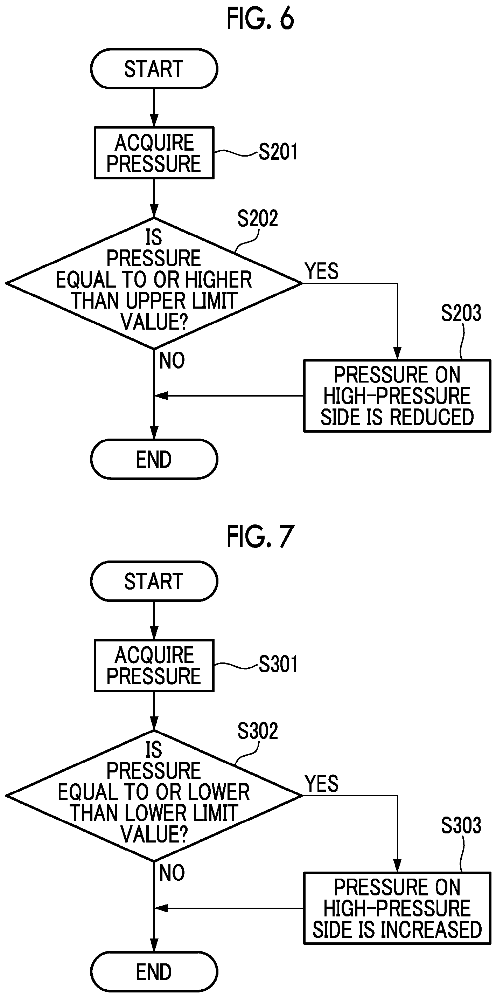

Next, an example of the high-pressure lowering process on the high-pressure-side control by the constant-temperature transport system described above will be described with reference to Fig. 6. Fig. 6 is a flowchart showing an example of a procedure of the high-pressure lowering process of the high-pressure-side control according to the present embodiment.

First, the pressure of the refrigerant on the discharge side of the compressor 21 is acquired (S201). Then, it is determined whether or not the pressure is equal to or higher than the upper limit value (S202). In a case where the pressure is equal to or higher than the upper limit value (determination of YES in S202), the pressure on the high-pressure side is reduced (S203). In a case where the pressure is not equal to or higher than the upper limit value (determination of NO in S202), the processing is ended.

Next, an example of the high-pressure increasing process on the high-pressure-side control by the constant-temperature transport system described above will be described with reference to Fig. 7. Fig. 7 is a flowchart showing an example of a procedure of the high-pressure increasing process of the high-pressure-side control according to the present embodiment.

First, the pressure of the refrigerant on the discharge side of the compressor 21 is acquired (S301). Then, it is determined whether or not the pressure is equal to or lower than the lower limit value (S302). In a case where the pressure is equal to or lower than the lower limit value (determination of YES in S302), the pressure on the high-pressure side is increased (S303). In a case where the pressure is not equal to or lower than the lower limit value (determination of NO in S302), the processing is ended.

Next, the effects of the above-described control will be described.

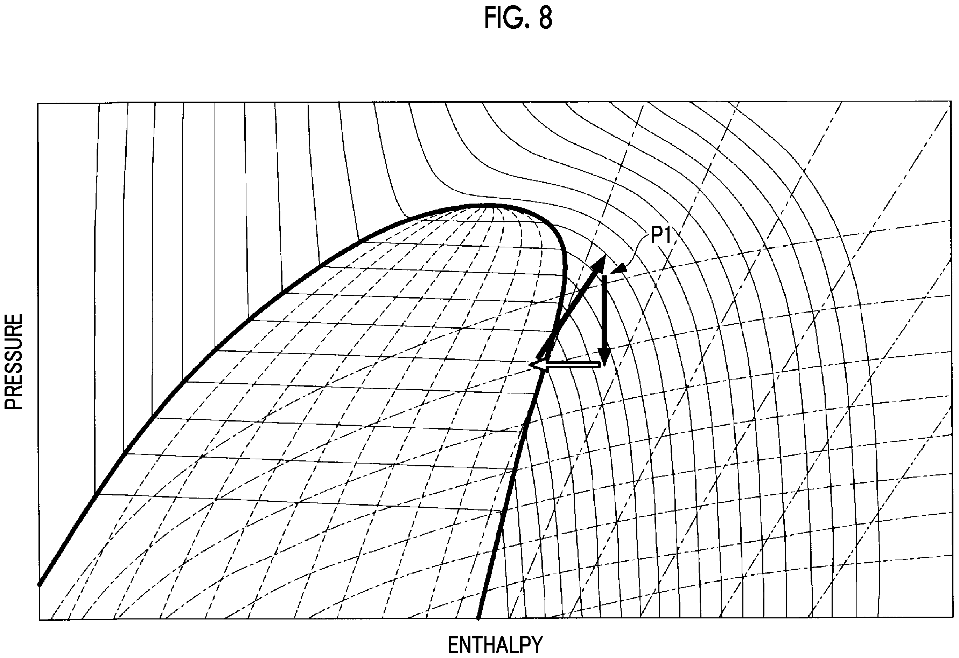

First, the heating capacity in the reference example will be described. The reference example is an example in a case where the control by the expansion valve 34 is not performed and the fixed orifice joint is set. Fig. 8 is a Mollier chart describing the heating capacity according to a reference example. In Fig. 8, a case where the number of fixed orifice joints is small (P1) is shown. P1 shows a state transition corresponding to the circulation passage in a case where the heating operation is performed. As shown in P1, in a case where the number of fixed orifice joints is small, the suction pressure of the compressor 21 is high, and there is a possibility that the allowable power of the compressor 21 may be exceeded. In addition, there is a risk that the allowable power or allowable pressure of the compressor 21 may be exceeded and the allowable range of the compressor 21 may be deviated. As described above, for the fixed orifice joint, the pressure of the refrigerant depends on the rotation speed of the compressor 21 (that is, the rotation speed of the vehicle engine). Therefore, the optimal operation cannot be performed under each condition such as the temperature of the inside of the compartment and the rotation speed of the compressor 21, and the heating capacity is reduced under some conditions, and thus the stable heating capacity cannot be obtained. In a case where the number of fixed orifice joints is large (in a case of excessive number), although the enthalpy difference can be increased, the density of the compressor suction gas is lowered, and the heating capacity is reduced.

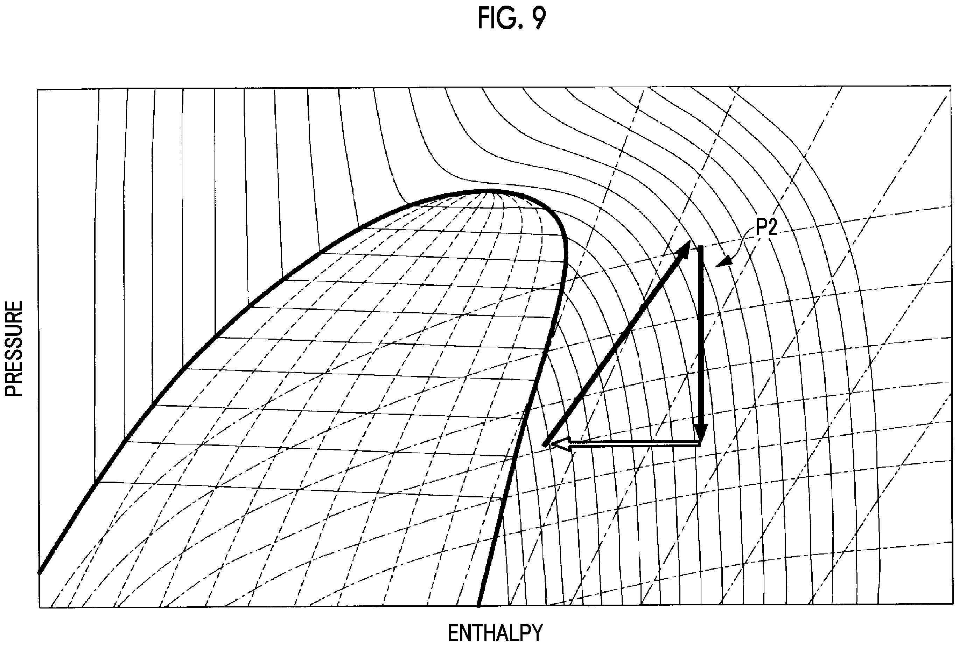

Next, the heating capacity in the present embodiment will be described. Fig. 9 is a Mollier chart describing the heating capacity in a case where the low-pressure control is performed. P2 shows a state transition corresponding to the circulation passage in a case where the low-pressure control is performed in the heating operation. As shown in Fig. 9, by controlling the expansion valve 34, even when the rotation speed of the compressor 21 is varied, the condensation is suppressed and the heating capacity is suppressed from being reduced. That is, it is possible to stabilize the heating capacity.

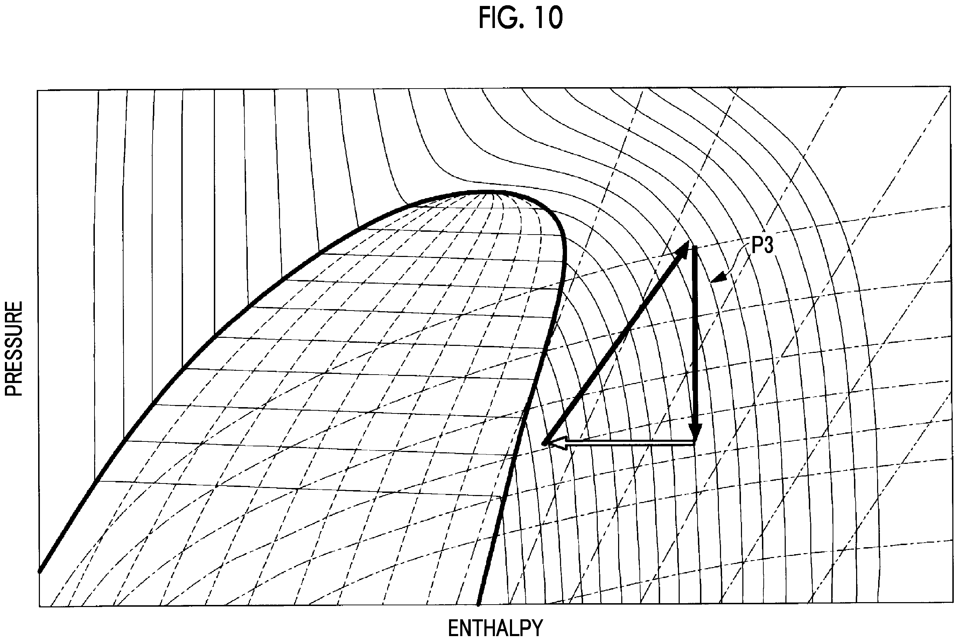

Next, the heating capacity in the present embodiment will be described. Fig. 10 is a Mollier chart describing the heating capacity in a case where the high-pressure control is performed. P3 shows a state transition corresponding to the circulation passage in a case where the high-pressure control is performed in the heating operation. In the high-pressure control, the high-pressure lowering control and the high-pressure increasing control are performed. It is more preferable that the high-pressure target value is controlled as an upper limit value within the usage limit (an upper limit value for high-pressure lowering control). As shown in Fig. 10, the expansion valve 34 is controlled in the same manner as the low-pressure control. In this manner, even when the rotation speed of the compressor 21 is varied, it is possible to suppress a reduction in the heating capacity and to stabilize the heating capacity. In addition, the operation can be made safer.

Next, a hardware configuration diagram of the control system 80 included in the constant-temperature transport system will be described.

As described above, in the present embodiment, the function of the control unit 81 is mechanically incorporated into the temperature-type automatic expansion valve. However, the function may be programmed with an electronic expansion valve.

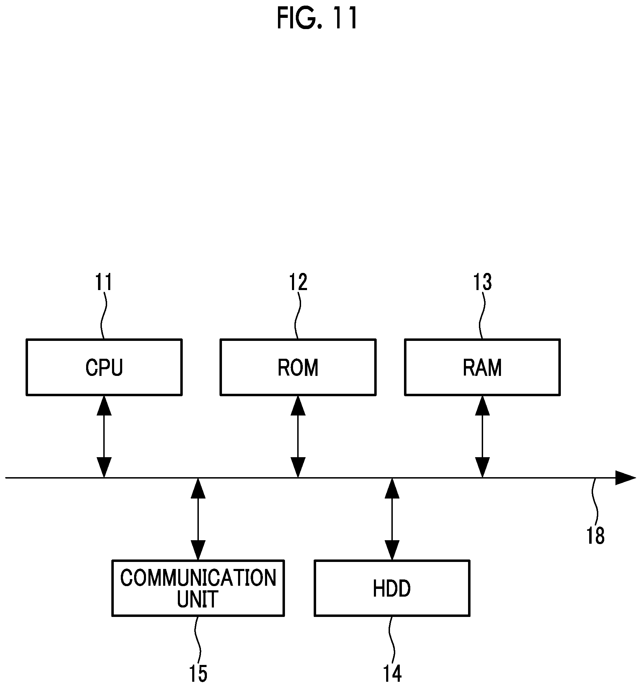

Fig. 11 is a view illustrating an example of a hardware configuration of the control system 80 according to the present embodiment.

As shown in Fig. 11, the control system 80 is a computer system (a calculation system), and includes, for example, a CPU 11, a read only memory (ROM) 12 for storing a program executed by the CPU 11, a random access memory (RAM) 13 for functioning as a work region when executing each program, a hard disk drive (HDD) 14 as a large-capacity storage device, and a communication unit 15 for the connection to a network or the like. Note that, a solid state drive (SSD) may be used as the large-capacity storage device. These each of units is connected via a bus 18. In addition, an input unit such as a keyboard or a mouse, or a display unit such as a liquid crystal display device for displaying data may be included. Note that, a storage medium for storing a program or the like which is executed by the CPU 11 is not limited to the ROM 12. For example, other auxiliary storage devices such as magnetic disks, magneto-optical disks, and semiconductor memories may be used. A series of processing processes for realizing various functions are recorded in the hard disk drive 14 or the like in the form of a program, and the CPU 11 reads out the program to the RAM 13 or the like and executes processing of processing and calculation of information, thereby realizing various functions to be described later. As the program, a form installed in advance in the ROM 12 or other storage medium, a form of being provided in a state of being stored in the computer-readable storage medium, a form of being delivered via wired or wireless communication means, or the like may be applied. The computer-readable storage medium is a magnetic disk, a magneto-optical disk, a CD-ROM, a DVD-ROM, a semiconductor memory, or the like.

As described above, according to the constant-temperature transport system, the vehicle, and the control method according to the present embodiment, in a case where the refrigerant compressed by the compressor 21 is introduced into the internal heat exchanger 29 via hot gas bypass passage 33 and heats the inside of the compartment, the expansion valve 34 is controlled such that the saturation temperature corresponding to the pressure of the refrigerant on the outlet side of the internal heat exchanger 29 is lower than the temperature of the air of the internal heat exchanger 29 by a predetermined temperature. Therefore, the reduction in the heating capacity due to the condensation and excessive throttling of the refrigerant in the circulation passage is suppressed. Therefore, it is possible to suppress the reduction in the heating capacity within a safe operation range of the compressor.

### [Second Embodiment]

Next, a constant-temperature transport system, a vehicle, and a control method according to a second embodiment of the present disclosure will be described.

In the present embodiment, a case where gas injection is used will be described. Hereinafter, a constant-temperature transport system, a vehicle, and a control method according to the present embodiment will be mainly described with respect to points different from those of the first embodiment.

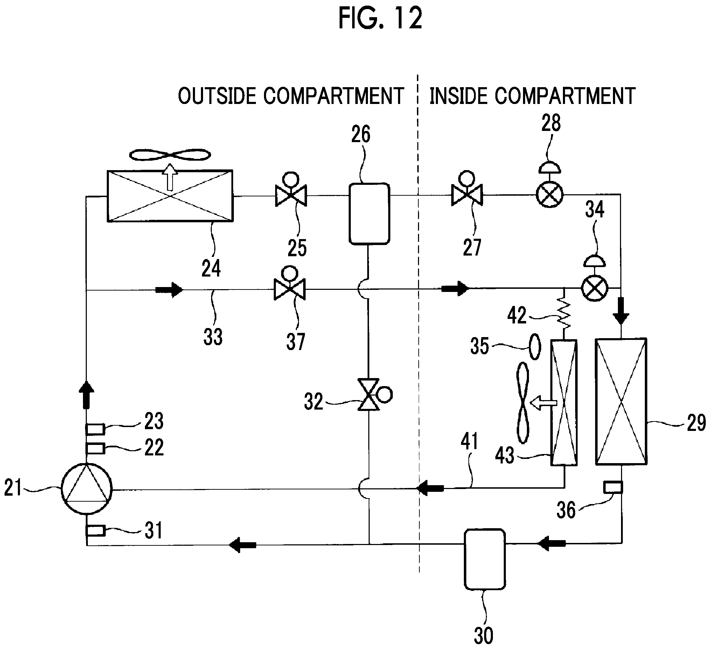

Fig. 12 is a diagram showing a refrigerant circuit. As shown in Fig. 12, in the present embodiment, an injection passage 41 is provided. The injection passage 41 is a passage that supplies the refrigerant from the upstream side of the expansion valve 34 in the hot gas bypass passage 33 to the intermediate-pressure port of the compressor 21. The intermediate-pressure port of the compressor 21 is a port through which the refrigerant can be sucked at an intermediate stage in a pressure process of the compressor 21.

A decompression unit 42 is provided in the injection passage 41. The decompression unit 42 is a unit that decompresses the refrigerant. The decompression unit 42 is, for example, a fixed orifice joint or an expansion valve (a temperature-type automatic expansion valve or an electronic expansion valve).

Then, the internal heat exchanger 43 is provided on the downstream side of the decompression unit 42 of the injection passage 41. That is, the internal heat exchanger 29 is a first internal heat exchanger, and the internal heat exchanger 43 is a second internal heat exchanger. The internal heat exchanger 29 and the internal heat exchanger 43 may be disposed in series with respect to the air flow or may be disposed in parallel with respect to the air flow. In particular, the internal heat exchanger 43 is preferably disposed in series with respect to the internal heat exchanger 29 and connected to the downstream of the air flow since the refrigerant temperature is higher than that of the internal heat exchanger 29. Since the internal heat exchanger 43 is disposed in series, a risk of deviating from the operation range of the compressor 21 is reduced.

As described above, according to the constant-temperature transport system, the vehicle, and the control method according to the present embodiment, the injection passage 41 that supplies the refrigerant from the upstream side of the expansion valve in the hot gas bypass passage 33 to the intermediate-pressure port of the compressor 21 is provided, and the decompression unit 42 and the internal heat exchanger 43 are provided, whereby the heating capacity can be improved.

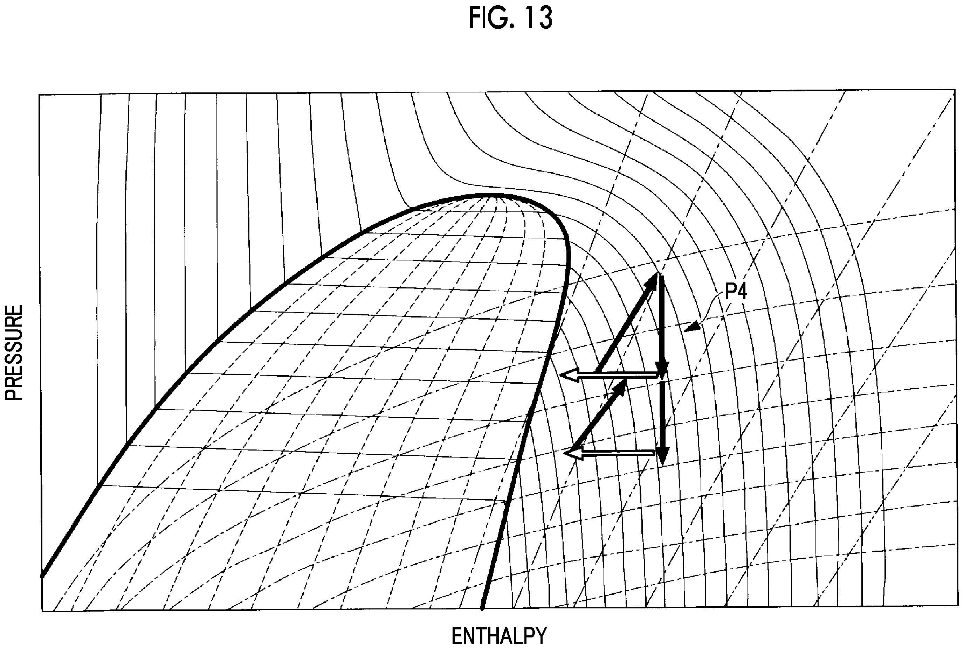

Fig. 13 is a Mollier chart describing the heating capacity in a case where the injection passage 41 is provided. P4 shows a state transition corresponding to the circulation passage in a case where the injection passage 41 is provided and the heating operation is performed. As shown in Fig. 13, the heating of the inside of the compartment at both internal heat exchanger 29 and internal heat exchanger 43 can be performed and thus the heating capacity can be improved.

In the present embodiment, a case where the injection passage 41 is provided in addition to the control of the expansion valve 34 in the first embodiment has been described. However, the control of the expansion valve 34 may be omitted.

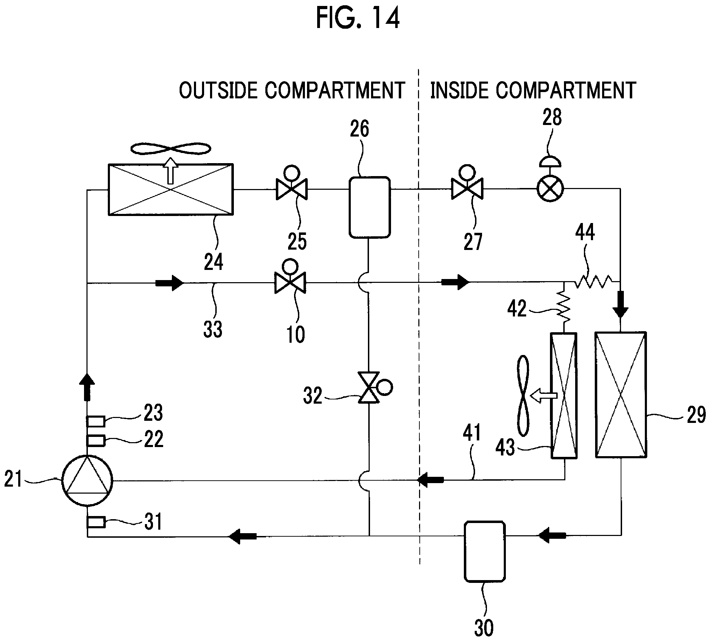

Specifically, as shown in Fig. 14, the injection passage 41, the decompression unit (second decompression unit) 42, and the internal heat exchanger 43 are provided as in Fig. 12, and the expansion valve 34 in Fig. 12 is the decompression unit (first decompression unit) 44 (not limited to the expansion valve). The decompression unit 44 is, for example, a fixed orifice joint. The decompression unit 44 may be an expansion valve (a mechanical expansion valve or an electronic expansion valve). In this way, the pressure control on the outlet side of the internal heat exchanger 29 by the expansion valve 34 in the first embodiment may not be performed.

### [Third Embodiment]

Next, a constant-temperature transport system, a vehicle, and a control method according to a third embodiment of the present disclosure will be described.

In the second embodiment, a case where the injection passage 41 is provided in the refrigerant circuit including the hot gas bypass passage 33 has been described. Meanwhile, a case where the injection passage 79 is provided in the refrigerant circuit that performs heating by the heat pump will be described. Hereinafter, the constant-temperature transport system, the vehicle, and the control method according to the present embodiment will be mainly described with respect to points different from those of the first embodiment and the second embodiment.

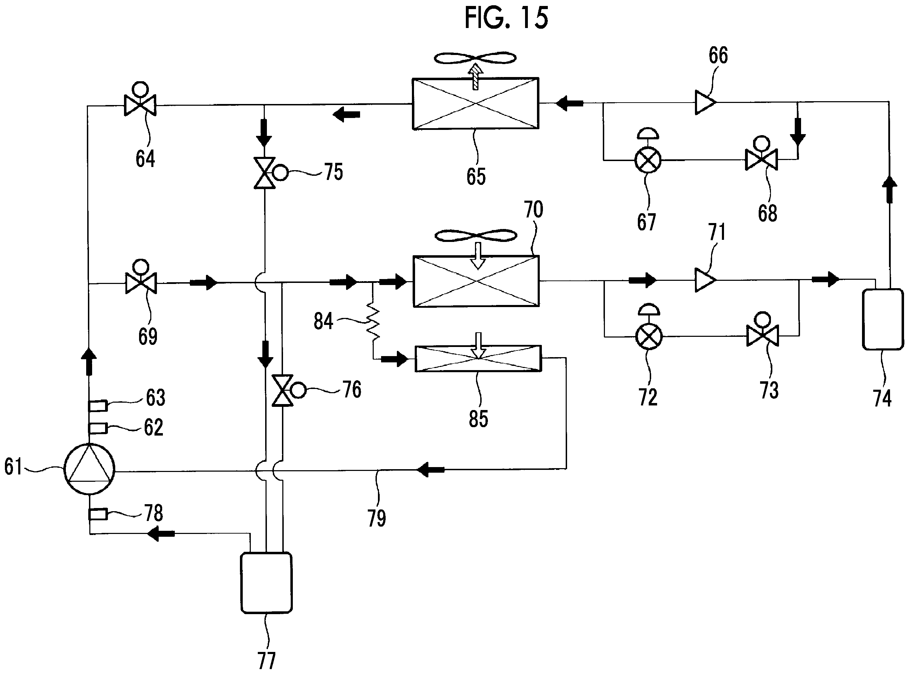

Fig. 15 is a diagram showing a refrigerant circuit. The compressor 61 compresses the refrigerant. The compressor 61 is driven by, for example, an engine of a vehicle including a constant-temperature transport system. That is, the rotation speed of the compressor 61 is in conjunction with the rotation speed of the engine of the vehicle. An external heat exchanger 65 is connected to the compressor 61 via an external hot gas electromagnetic valve 64. For example, a discharge temperature sensor 62 or a discharge pressure sensor 63 is provided on the outlet side of the compressor 61. The external heat exchanger 65 is provided outside the cargo compartment. The external heat exchanger 65 is connected to the receiver 74 via a backflow prevention unit 66. The electromagnetic valve 68 and the expansion valve 67 are provided in parallel with respect to the backflow prevention unit 66. In addition, the first internal heat exchanger 70 is connected to the compressor 61 via the internal hot gas electromagnetic valve 69. The first internal heat exchanger 70 is provided in the cargo compartment. The first internal heat exchanger 70 is connected to the receiver 74 via a backflow prevention unit 71. The electromagnetic valve 73 and the expansion valve 72 are provided in parallel with the backflow prevention unit 71. Then, the accumulator 77 is connected between the external heat exchanger 65 and the external hot gas electromagnetic valve 64 via an electromagnetic valve 75. The accumulator 77 is connected between the first internal heat exchanger 70 and the internal hot gas electromagnetic valve 69 via an electromagnetic valve 76. The accumulator 77 is connected to the inlet side of the compressor 61. For example, a suction pressure sensor 78 is provided on the inlet side of the compressor 61.

In such a circuit, in a case where the inside of the compartment is heated, the refrigerant flows in the order of the compressor 61, the internal hot gas electromagnetic valve 69, the first internal heat exchanger 70, the receiver 74, the external heat exchanger 65, and the accumulator 77 as shown in Fig. 15.

The refrigerant circuit is provided with an injection passage 79. The injection passage 79 is a passage that supplies the refrigerant from the upstream side of the first internal heat exchanger 70 to the intermediate-pressure port of the compressor 61. A decompression unit 84 is provided in the injection passage 79. The decompression unit 84 is a unit that decompresses the refrigerant. The decompression unit 84 is, for example, a fixed orifice joint or an expansion valve (a mechanical expansion valve or an electronic expansion valve).

The second internal heat exchanger 85 is provided on the downstream side of the decompression unit 84 of the injection passage 79. The first internal heat exchanger 70 and the second internal heat exchanger 85 may be disposed in series with respect to the air flow or may be disposed in parallel with respect to the air flow. In particular, it is preferable that the second internal heat exchanger 85 is connected to the downstream side (serial downstream) of the air flow with respect to the first internal heat exchanger 70. In a case where the heating operation is performed, the refrigerant flows in the order of the compressor 61, the first internal heat exchanger 70, the expansion valve 67, and the external heat exchanger 65, and a part of the refrigerant discharged from the compressor 61 flows through the second internal heat exchanger 85.

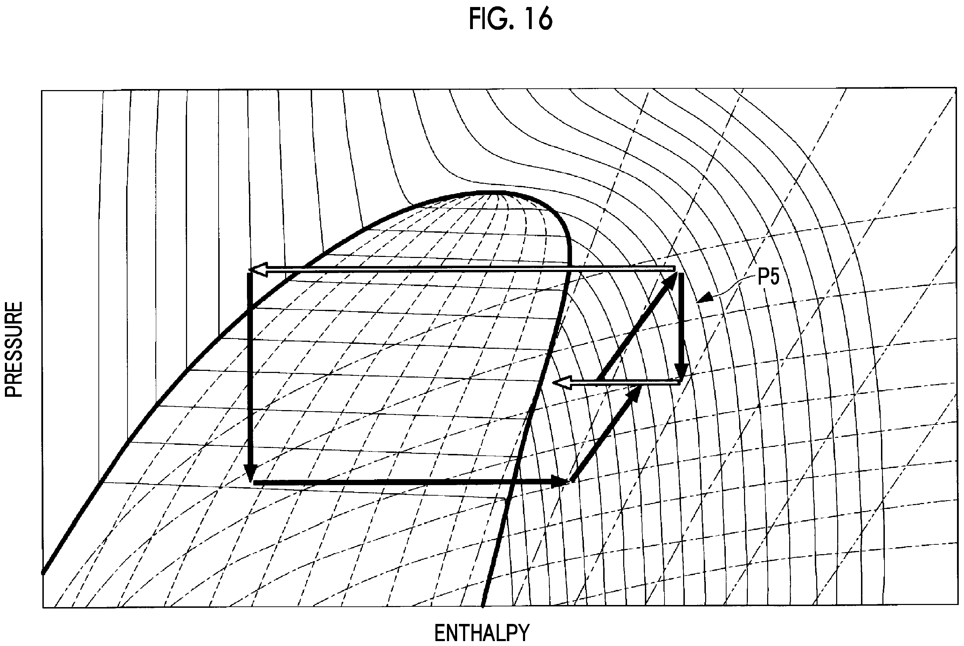

Fig. 16 is a Mollier chart describing the heating capacity in a case where the injection passage 79 is provided. P5 shows a state transition corresponding to the circulation passage in a case where the injection passage 79 is provided and the heating operation is performed. As shown in Fig. 16, the heating of the inside of the compartment at both first internal heat exchanger 70 and second internal heat exchanger 85 can be performed and thus the heating capacity can be improved.

As described above, according to the constant-temperature transport system, the vehicle, and the control method according to the present embodiment, the heating capacity can be improved by the injection passage 79.

The present disclosure is not limited to only the embodiments described above, and various modifications can be made within a scope which does not depart from the concept of the invention. It is also possible to combine the respective embodiments. In other words, the above-described first embodiment, second embodiment, and third embodiment can also be combined with each other.

The constant-temperature transport system, the vehicle, and the control method described in each of the above-described embodiments are understood as follows, for example.

A constant-temperature transport system according to the present disclosure including a compressor (21) that compresses a refrigerant; an external heat exchanger (24) that is connected to a downstream side of the compressor; an internal heat exchanger (29) that is connected to a downstream side of the external heat exchanger; a hot gas bypass passage (33) that is connected to a discharge side of the compressor and that supplies the refrigerant to the internal heat exchanger by bypassing the external heat exchanger; an expansion valve (34) that is provided in the hot gas bypass passage; a temperature measurement unit (35) that measures a temperature of air related to the internal heat exchanger; a pressure measurement unit (36) that measures a pressure of the refrigerant on an outlet side of the internal heat exchanger; and a control unit (81) that controls the expansion valve such that a saturation temperature corresponding to the pressure is lower than the temperature by a predetermined temperature on the outlet side of the internal heat exchanger.

According to the constant-temperature transport system according to the present disclosure, in a case where the refrigerant compressed by the compressor is introduced into the internal heat exchanger via the hot gas bypass passage and heats the inside of the compartment, the expansion valve is controlled such that the saturation temperature corresponding to the pressure of the refrigerant on the outlet side of the internal heat exchanger is lower than the temperature of the air of the internal heat exchanger by a predetermined temperature. Therefore, the condensation and the excessive throttling of the refrigerant in the circulation passage are suppressed. Therefore, it is possible to suppress the reduction in the heating capacity within a safe operation range of the compressor.

In the constant-temperature transport system according to the present disclosure, the external heat exchanger may be a condenser, and the internal heat exchanger is an evaporator.

According to the constant-temperature transport system according to the present disclosure, it is possible to suppress a reduction in heating capacity in a case where the compressed refrigerant is introduced into the evaporator via the hot gas bypass passage and heats inside of the compartment.

In the constant-temperature transport system according to the present disclosure, the predetermined temperature may be set to 5°C or higher.

According to the constant-temperature transport system according to the present disclosure, the condensation of the refrigerant in the circulation passage is effectively suppressed by setting the predetermined temperature to be 5°C or higher.

In the constant-temperature transport system according to the present disclosure, the predetermined temperature may be set in advance in a range of 5°C or higher and 10°C or lower.

According to the constant-temperature transport system according to the present disclosure, the appropriate condensation of the refrigerant in the circulation passage is suppressed by setting the predetermined temperature in a range of 5 °C or higher and 10°C or lower.

The constant-temperature transport system according to the present disclosure may further include a discharge side control unit (82) that increases a pressure of the refrigerant on the discharge side of the compressor in a case where the pressure of the refrigerant on the discharge side of the compressor is equal to or less than a predetermined lower limit value.

According to the constant-temperature transport system according to the present disclosure, a reduction in heating capacity can be suppressed by increasing the pressure of the refrigerant in a case where the pressure of the refrigerant on the discharge side of the compressor is equal to or less than the lower limit value.

In the constant-temperature transport system according to the present disclosure, a refrigerant inside a receiver provided between the external heat exchanger and the internal heat exchanger may be merged with the refrigerant flowing through the hot gas bypass passage to increase the pressure of the refrigerant on the discharge side of the compressor.

According to the constant-temperature transport system according to the present disclosure, a refrigerant inside a receiver provided between the external heat exchanger and the internal heat exchanger can be merged with the refrigerant flowing through the hot gas bypass passage to increase the pressure of the refrigerant on the discharge side of the compressor.

The constant-temperature transport system according to the present disclosure may further include a discharge side control unit that reduces a refrigerant pressure of the refrigerant on the discharge side of the by storing a part of the refrigerant flowing through the hot gas bypass passage in a receiver (26) provided between the external heat exchanger and the internal heat exchanger.

According to the constant-temperature transport system according to the present disclosure, the pressure of the refrigerant on the discharge side of the compressor can be reduced by storing a part of the refrigerant flowing through the hot gas bypass passage in the receiver provided between the external heat exchanger and the internal heat exchanger.

In the constant-temperature transport system according to the present disclosure may further include, with the internal heat exchanger being used as a first internal heat exchanger, an injection passage (41) that supplies the refrigerant from an upstream side of the expansion valve in the hot gas bypass passage to an intermediate-pressure port of the compressor, a decompression unit (42) that is provided in the injection passage, and a second internal heat exchanger (43) that is provided on a downstream side of the decompression unit of the injection passage.

According to the constant-temperature transport system according to the present disclosure, the injection passage that supplies the refrigerant from the upstream side of the expansion valve in the hot gas bypass passage to the intermediate-pressure port of the compressor is provided, and the decompression unit and the second internal heat exchanger are provided, whereby the heating capacity can be improved.

A constant-temperature transport system according to the present disclosure includes a compressor (21) that compresses a refrigerant, an external heat exchanger (24) that is connected to a downstream side of the compressor, a first internal heat exchanger (29) that is connected to a downstream side of the external heat exchanger, a hot gas bypass passage (33) that is connected to a discharge side of the compressor and that supplies the refrigerant to the first internal heat exchanger by bypassing the external heat exchanger, a first decompression unit (34 and 44) that is provided in the hot gas bypass passage, an injection passage (41) that supplies the refrigerant from an upstream side of the first decompression unit in the hot gas bypass passage to an intermediate-pressure port of the compressor, a second decompression unit (42) that is provided in the injection passage, and a second internal heat exchanger (43) that is provided on a downstream side of the second decompression unit in the injection passage.

According to the constant-temperature transport system according to the present disclosure, the injection passage that supplies the refrigerant from the upstream side of the expansion valve in the hot gas bypass passage to the intermediate-pressure port of the compressor is provided, and the decompression unit and the second internal heat exchanger are provided, whereby the heating capacity can be improved.

A constant-temperature transport system according to the present disclosure includes a compressor (61) that compresses a refrigerant, an external heat exchanger (65), a first internal heat exchanger (70), an expansion valve (67), an injection passage (79) that supplies the refrigerant from between the first internal heat exchanger and the compressor to an intermediate-pressure port of the compressor, a decompression unit (84) provided in the injection passage, and a second internal heat exchanger (85) provided on a downstream side of the decompression unit of the injection passage, in which in a case of performing a heating operation, the refrigerant flows in the compressor, the first internal heat exchanger, the expansion valve, and the external heat exchanger in this order, and a part of the refrigerant discharged from the compressor flows through the second internal heat exchanger.

According to the constant-temperature transport system according to the present disclosure, the heating capacity can be improved by the injection passage.

A vehicle according to the present disclosure includes the above-described constant-temperature transport system.

A control method for a constant-temperature transport system according to the present disclosure that includes a compressor that compresses a refrigerant, an external heat exchanger that is connected to a downstream side of the compressor, an internal heat exchanger that is connected to a downstream side of the external heat exchanger, a hot gas bypass passage that is connected to a discharge side of the compressor and that supplies the refrigerant to the internal heat exchanger by bypassing the external heat exchanger, an expansion valve that is provided in the hot gas bypass passage, a temperature measurement unit that measures a temperature of air related to the internal heat exchanger, and a pressure measurement unit that measures a pressure of the refrigerant on an outlet side of the internal heat exchanger, the method includes controlling the expansion valve such that a saturation temperature corresponding to the pressure is lower than the temperature by a predetermined temperature on the outlet side of the internal heat exchanger.

### Reference Signs List

- 11:: CPU
- 12:: ROM
- 13:: RAM
- 14:: hard disk drive
- 15:: communication unit
- 18:: bus
- 21:: compressor
- 22:: discharge temperature sensor
- 23:: discharge pressure sensor
- 24:: external heat exchanger
- 25:: outlet electromagnetic valve
- 26:: receiver
- 27:: liquid line electromagnetic valve
- 28:: expansion valve
- 29:: internal heat exchanger
- 30:: accumulator
- 31:: suction pressure sensor
- 32:: liquid bypass electromagnetic valve
- 33:: hot gas bypass passage
- 34:: expansion valve
- 35:: temperature measurement unit
- 36:: pressure measurement unit
- 37:: hot gas electromagnetic valve
- 41:: injection passage
- 42:: decompression unit
- 43:: internal heat exchanger
- 44:: decompression unit
- 61:: compressor
- 64:: external hot gas electromagnetic valve
- 65:: external heat exchanger
- 66:: backflow prevention unit
- 67:: expansion valve
- 68:: electromagnetic valve
- 69:: internal hot gas electromagnetic valve
- 70:: first internal heat exchanger
- 71:: backflow prevention unit
- 72:: expansion valve
- 73:: electromagnetic valve
- 74:: receiver
- 75:: electromagnetic valve
- 76:: electromagnetic valve
- 77:: accumulator
- 78:: suction pressure sensor
- 79:: injection passage
- 80:: control system
- 81:: control unit
- 82:: discharge side control unit
- 83:: setting unit
- 84:: decompression unit
- 85:: second internal heat exchanger

## Claims

1. A constant-temperature transport system comprising:
a compressor that compresses a refrigerant;
an external heat exchanger that is connected to a downstream side of the compressor;
an internal heat exchanger that is connected to a downstream side of the external heat exchanger;
a hot gas bypass passage that is connected to a discharge side of the compressor and that supplies the refrigerant to the internal heat exchanger by bypassing the external heat exchanger;
an expansion valve that is provided in the hot gas bypass passage;
a temperature measurement unit that measures a temperature of air related to the internal heat exchanger;
a pressure measurement unit that measures a pressure of the refrigerant on an outlet side of the internal heat exchanger; and
a control unit that controls the expansion valve such that a saturation temperature corresponding to the pressure is lower than the temperature by a predetermined temperature on the outlet side of the internal heat exchanger.

2. The constant-temperature transport system according to Claim 1, wherein
the external heat exchanger is a condenser, and the internal heat exchanger is an evaporator.

3. The constant-temperature transport system according to Claim 1 or 2, wherein
the predetermined temperature is set to 5°C or higher.

4. The constant-temperature transport system according to any one of Claims 1 to 3, wherein
the predetermined temperature is set in advance in a range of 5°C or higher 10°C or lower.

5. The constant-temperature transport system according to any one of Claims 1 to 4, further comprising:
a discharge side control unit that increases a pressure of the refrigerant on the discharge side of the compressor in a case where the pressure of the refrigerant on the discharge side of the compressor is equal to or less than a predetermined lower limit value.

6. The constant-temperature transport system according to Claim 5, wherein
a refrigerant inside a receiver provided between the external heat exchanger and the internal heat exchanger is merged with the refrigerant flowing through the hot gas bypass passage to increase the pressure of the refrigerant on the discharge side of the compressor.

7. The constant-temperature transport system according to any one of Claims 1 to 4, further comprising:
a discharge side control unit that reduces a pressure of the refrigerant on the discharge side of the compressor by storing a part of the refrigerant flowing through the hot gas bypass passage in a receiver provided between the external heat exchanger and the internal heat exchanger.

8. The constant-temperature transport system according to Claim 1, further comprising:
with the internal heat exchanger being used as a first internal heat exchanger,
an injection passage that supplies the refrigerant from an upstream side of the expansion valve in the hot gas bypass passage to an intermediate-pressure port of the compressor;
a decompression unit that is provided in the injection passage; and
a second internal heat exchanger that is provided on a downstream side of the decompression unit of the injection passage.

9. A constant-temperature transport system comprising:
a compressor that compresses a refrigerant;
an external heat exchanger that is connected to a downstream side of the compressor;
a first internal heat exchanger that is connected to a downstream side of the external heat exchanger;
a hot gas bypass passage that is connected to a discharge side of the compressor and that supplies the refrigerant to the first internal heat exchanger by bypassing the external heat exchanger;
a first decompression unit that is provided in the hot gas bypass passage;
an injection passage that supplies the refrigerant from an upstream side of the first decompression unit in the hot gas bypass passage to an intermediate-pressure port of the compressor;
a second decompression unit that is provided in the injection passage; and
a second internal heat exchanger that is provided on a downstream side of the second decompression unit in the injection passage.

10. A constant-temperature transport system comprising:
a compressor that compresses a refrigerant;
an external heat exchanger;
a first internal heat exchanger;
an expansion valve;
an injection passage that supplies the refrigerant from between the first internal heat exchanger and the compressor to an intermediate-pressure port of the compressor;
a decompression unit that is provided in the injection passage; and
a second internal heat exchanger that is provided on a downstream side of the decompression unit of the injection passage, wherein
in a case of performing a heating operation, the refrigerant flows in the compressor, the first internal heat exchanger, the expansion valve, and the external heat exchanger in this order, and a part of the refrigerant discharged from the compressor flows through the second internal heat exchanger.

11. A vehicle comprising:
the constant-temperature transport system according to any one of Claims 1 to 10.

12. A control method for a constant-temperature transport system that includes a compressor that compresses a refrigerant, an external heat exchanger that is connected to a downstream side of the compressor, an internal heat exchanger that is connected to a downstream side of the external heat exchanger, a hot gas bypass passage that is connected to a discharge side of the compressor and that supplies the refrigerant to the internal heat exchanger by bypassing the external heat exchanger, an expansion valve that is provided in the hot gas bypass passage, a temperature measurement unit that measures a temperature of air related to the internal heat exchanger, and a pressure measurement unit that measures a pressure of the refrigerant on an outlet side of the internal heat exchanger, the method comprising:
controlling the expansion valve such that a saturation temperature corresponding to the pressure is lower than the temperature by a predetermined temperature on the outlet side of the internal heat exchanger.
